**Europäisches Patentamt**

**European Patent Office**

**Office européen des brevets**

(19)

(11) Veröffentlichungsnummer: **0 042 918**
**A1**

(12) # EUROPÄISCHE PATENTANMELDUNG

(21) Anmeldenummer: **81102637.6**

(22) Anmeldetag: **08.04.81**

(51) Int. Cl.³: **B 27 G 21/00**

(30) Priorität: **28.06.80 DE 3024561**

(43) Veröffentlichungstag der Anmeldung:
**06.01.82 Patentblatt 82/1**

(84) Benannte Vertragsstaaten:
**DE FR GB IT NL SE**

(71) Anmelder: **ROBERT BOSCH GMBH**
**Postfach 50**
**D-7000 Stuttgart 1(DE)**

(72) Erfinder: **Gerber, Hans**
**Bahnweg 10**
**CH-4708 Luterbach(CH)**

(72) Erfinder: **Heiniger, Ulrich**
**Kornfeldstrasse 9**
**CH-4528 Zuchwil(CH)**

(72) Erfinder: **Schädlich, Fritz, Ing.-grad.**
**Panoramastrasse 4**
**D-7022 Leinfelden-Echterdingen(DE)**

(54) **Handwerkzeugmaschine mit elektromotorischem Antrieb.**

(57) Es wird eine Handwerkzeugmaschine mit elektromotorischem Antrieb vorgeschlagen, bei der die Gefahr der Verletzung des Bedienenden und der Beschädigung des Werkzeugs durch das nachlaufende Werkzeug mittels einer Schnellbremseinrichtung beseitigt ist. Die Handwerkzeugmaschine umfaßt für den Motor eine Schaltung, die eine Stromversorgung vom Wechselstromnetz mit einem nie sein Vorzeichen wechselnden Strom (34 bis 37) und eine Kurzschluß-Bremsschaltung (31 bis 33, 38 bis 52) einschließt. Sie enthält aber auch eine Bandbremse, die als elektromechanischer Bremslüfter (10, 15,16) arbeitet. Die kombinierte Versorgungs-Kurzschluß-Bremsschaltung schließt ein Versagen der Kurzschlußbremse beim Abschalten im Augenblick des Null-Durchganges des magnetischen Flusses aus. Beide Bremseinrichtungen werden vorzugsweise durch einen gemeinsamen Schalter (29) gesteuert.

FIG.1

FIG. 3

R. 6381

12.6.1980 Br/Wl

ROBERT BOSCH GMBH, 7000 Stuttgart 1

## Handwerkzeugmaschine mit elektromotorischem Antrieb

### Stand der Technik

Die Erfindung geht aus von einer Handwerkzeugmaschine nach der Gattung des Hauptanspruchs. Solche Handwerkzeugmaschinen, insbesondere solche für Amateurzwecke, laufen, vor allem wenn sie hochtourig arbeiten, nach dem Abschalten verhältnismäßig langsam aus. Das ist gefährlich für den Bedienenden. Auch das Werkzeug kann beschädigt werden, wenn die Maschine zu frühzeitig abgelegt wird.

### Vorteile der Erfindung

Die erfindungsgemäße Handwerkzeugmaschine mit den kennzeichnenden Merkmalen des Hauptanspruchs hat demgegenüber den Vorteil, sowohl die Verletzungsgefahr für den Bedienenden als auch die Gefahr der Beschädigung des Werkzeugs zu vermeiden. Durch das schnelle Abbremsen des Werkzeugs oder des Werkzeugträgers wird das Werkzeug stillgesetzt, bevor der Bedienende die Handwerkzeugmaschine ablegen oder irgendwie in gefährliche Nähe des Werkzeugs gelangen kann.

0042918
R. 6381

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft ist zum sicheren Abbremsen, wenn der Werkzeugträger mit einem Universalmotor getrieblich verbunden ist, dessen Stromversorgung vom Wechselstromnetz über eine Schaltung erfolgt, die den Motor mit einem nie sein Vorzeichen wechselnden Strom speist und der außerdem an eine an sich bekannte Kurzschluß-Bremsschaltung angeschlossen ist. Auf diese Weise wird vermieden, daß ein nur mit einer Kurzschluß-Bremsschaltung versehener und gerade im Moment des Null-Durchgangs des magnetischen Flusses abgeschalteter Universal-Motor ungebremst weiterläuft, weil er kein Magnetfeld erzeugen kann.

Ebenso vorteilhaft kann es auch sein, dem Element mit der größten kinetischen Energie im Kraftfluß vom Motor zum Werkzeug eine elektromechanisch lösbare Bremse zuzuordnen. Die Wirkung dieser Bremse kann durch eine Feder verursacht sein, deren Kraft ein Elektromagnet beim Einschalten der Stromversorgung überwinden kann, um die Bremse zu lösen.

Zeichnung

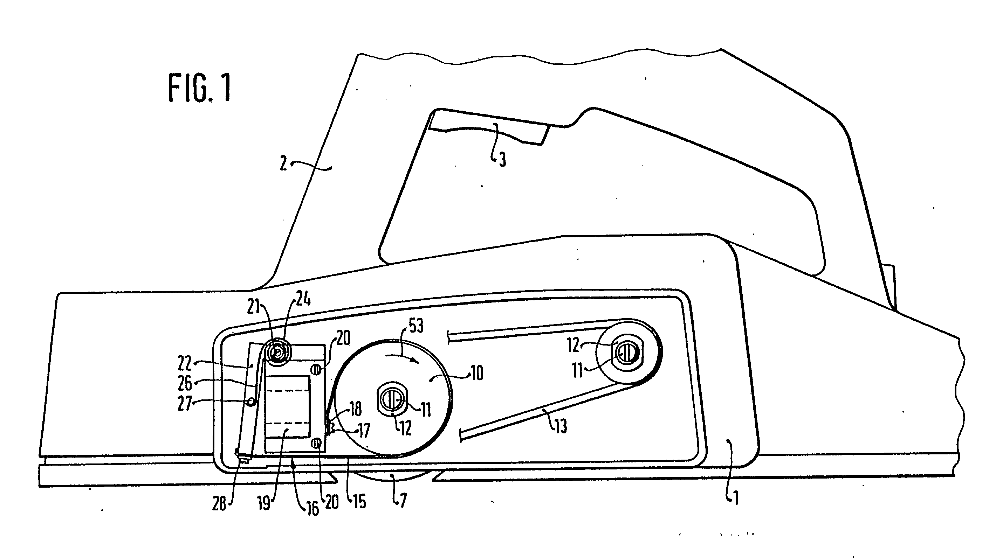

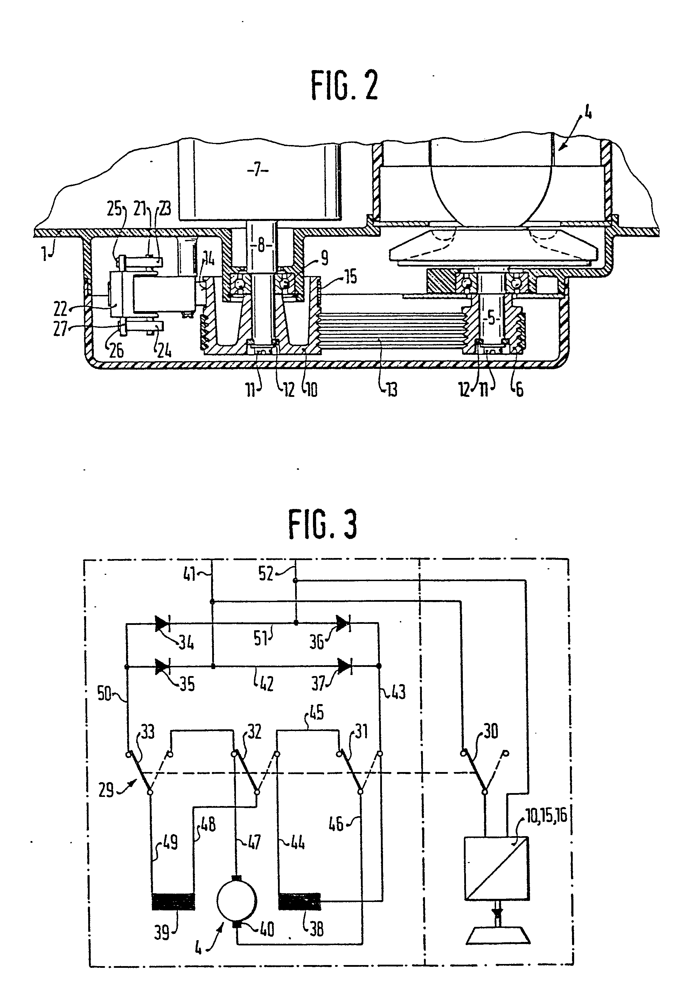

Ein Ausführungsbeispiel des Erfindungsgegenstandes ist in der Zeichnung dargestellt und in der nachfolgenden Beschreibung näher erläutert. Es zeigen Figur 1 eine Seitenansicht eines erfindungsgemäß ausgestatteten, motorisch betriebenen Handhobels mit abgenommener Getriebeschutzkappe, Figur 2 eine Draufsicht zu Figur 1, teilweise geschnitten, und Figur 3 ein Schaltbild, das die Stromversorgung der Handwerkzeugmaschine verdeutlicht.

Beschreibung des Ausführungsbeispiels

Ein Gehäuse 1 eines motorisch betriebenen Handhobels ist mit einem Griffbügel 2 versehen, der eine Schalthandhabe 3 aufnimmt. Im Innern des Gehäuses 1 ist ein Motor 4 befestigt, dessen kugelgelagerte Motorwelle 5 eine Riemenscheibe 6 trägt. Eine Messerwalze 7 ist mit ihrer Achse 8 in Kugellagern 9 im Gehäuse 1 gelagert. Dabei liegt die Achse 8 parallel zur Motorwelle 5. Auf dem freien Ende der Achse 8 ist eine Riemenscheibe 10 befestigt, die zugleich als Bremstrommel ausgebildet ist. Der Befestigung der Riemenscheiben 6 und 10 auf der Motorwelle 5 bzw. der Achse 8 dienen jeweils Schrauben 11 und Unterlegscheiben 12. Die Riemenscheiben 6 und 10 sind verbunden durch einen Riemen 13. Eine Bremsbahn 14 der Riemenscheibe 10 wird umschlungen von einem Bremsband 15. Neben der Riemenscheibe 10 ist ein Elektromagnet 16 angeordnet, an dessen Gehäusewand das eine Ende des Bremsbandes 15 mittels einer Schraube 17 und einer Unterlegscheibe 18 befestigt ist. Das Gehäuse des Elektromagneten ist mit 19 bezeichnet. Es ist mittels zweier Schrauben 20 mit dem Gehäuse 1 verschraubt. In seinem oberen Teil ist es von einer Achse 21 durchdrungen. Die beiderseits des Gehäuses 19 hervorstehende Achse 21 dient einmal als Schwenkachse für eine Klappe 22, zum anderen der Befestigung des inneren Endes zweier Spiralfedern 23 und 24. Die freien Schenkel 25 bzw. 26 der Spiralfedern 23 bzw. 24 greifen an einem Stift 27 an, der die Klappe 22 durchdringt. Die Klappe 22 dient als Anker für den Elektromagneten 16. Das von der das Schwenklager für die Klappe 22 bildenden Achse abgewendete Ende dieser Klappe 22 ist mittels einer Schraube 28 mit dem anderen Ende des Bremsbandes 15 verbunden. Die beiden Spiralfedern 23 und 24 suchen die Klappe 22 stets weg vom Elektromagneten 16 zu schwenken und straffen dabei das Bremsband 15. Die Kraft des Elektromagneten 16 ist so bemessen, daß er die Kraft der beiden Spiralfedern 23 und 24 überwinden kann, sobald er beim Einschalten der Handwerkzeugmaschine an Spannung gelegt wird. Dieses an Spannung legen kann mittels eines Schalters 29 erfolgen, der mittels der Schalthandhabe 3 zu betätigen ist. Der Schalter 29 (Figur 3) ist als vierpoliger Schalter ausgelegt. Ein Schaltelement 30 dieses Schalters 29 dient dem Ein- und Ausschalten des elektromechanischen Bremslüfters 10, 15, 16. Die übrigen Schaltelemente 31 bis 33 sind Teile einer Stromversorgungs- Kurzschluß-Bremsschaltung für den Motor 4. Die in Figur 3 gezeigte Einphasen-Brückenschaltung enthält neben den Schaltelementen 31 bis 33 Gleichrichter 34 bis 37. Sie bezieht in Reihenschaltung Ständerwicklungen 38 und 39 und die Läuferwicklung 40 des Motors 4 ein. In der in Figur 3 gezeigten Einschaltstellung ist der Versorgungsstromkreis für den Motor 4 geschlossen von einer Zuleitung 41 über eine Verbindungsleitung 42, den Gleichrichter 37, eine Leitung 43, die Ständerwicklung 38, eine Leitung 44, eine Überbrückungsleitung 45 zwischen zwei Polen $E_2$, das Schaltelement 31, eine Leitung 46, die Läuferwicklung 40, eine Leitung 47, das Schaltelement 32, eine Leitung 48, die Ständerwicklung 39, eine Leitung 49, das Schaltelement 33, eine Leitung 50, den Gleichrichter 34 und eine Leitung 51 zur Rückleitung 52. Die in Figur 3 gestrichelt eingezeichnete Lage der Schaltelemente 31 bis 33 bewirkt die Kurzschluß-Bremsschaltung. Durch die aus der Schaltung gemäß Figur 3 folgende Speisung des Motors 5 mit einem immer in der gleichen Richtung fließenden Strom wird der magnetische Fluß wegen der Remanenz nie Null und es ist somit unabhängig vom zeitlichen Ausschaltmoment immer ein genügend starkes magnetisches Feld vorhanden, das die Bremsung auslösen kann. Der Aufbau der gewählten Schaltung ist einfach und ohne Probleme hinsichtlich der Dimensionierung der Elemente bei Anwendung der Schaltung für verschieden stark ausgelegte Motoren 4. Die einzelnen Schaltelemente können in verhältnismäßig engem Raum untergebracht werden.

Beim Eindrücken der Schalthandhabe 3 wird der Schalter 29 in die in Figur 3 stark gezeichnete Stellung gebracht. Damit werden der Motor 4 und der elektromechanische Bremslüfter 10, 15, 16 an Spannung gelegt. Der Elektromagnet 16 zieht die Klappe 22 gegen die Wirkung der Spiralfedern 23 und 24 an und löst somit die Umschlingung der Riemenscheibe 10 durch das Bremsband 15. Der Motor 4 läuft an und es kann mit dem Handwerkzeug gearbeitet werden. Wird die Schalthandhabe 3 losgelassen, polt der Schalter 29 die Ständerwicklungen 38, 39 um und schließt sie über die Läuferwicklung 40 kurz. Der Motor 4 arbeitet jetzt als Gleichstromgenerator mit Selbsterregung, wobei die Wicklungswiderstände als Bremswiderstände wirken. Die Bremswirkung dieser Schaltung wird unterstützt durch das Bremsband 15. Mit dem Loslassen der Schalthandhabe 3 und dem dadurch bewirkten Zurückstellen des Schalters 29 in seine Abschaltstellung wurde nämlich auch die Stromversorgung für den Elektromagneten 16 unterbrochen. Die vom Elektromagneten 16 losgelassene Klappe 22 schwenkte unter der Wirkung der Spiralfedern 23 und 24 im Uhrzeigersinn und zog dabei das Bremsband 15 fest an.

0042918

R. 6387
12.6.1980 Br/Wl

ROBERT BOSCH GMBH, 7000 Stuttgart 1

Ansprüche

1. Handwerkzeugmaschine mit elektromotorischem Antrieb des Werkzeugs, insbesondere für den Amateurgebrauch, dadurch gekennzeichnet, daß dem Werkzeug oder dem Werkzeugträger (7) eine Schnellbremseinrichtung (31 bis 33, 38 bis 52; 10, 15, 16) zugeordnet ist.

2. Handwerkzeugmaschine nach Anspruch 1, dadurch gekennzeichnet, daß der Werkzeugträger (7) mit einem Universalmotor (4) getrieblich verbunden ist, dessen Stromversorgung vom Wechselstromnetz über eine Schaltung (34 bis 37) erfolgt, die den Motor (4) mit einem nie sein Vorzeichen wechselnden Strom speist, und daß diese Schaltung (34 bis 37) verbunden ist mit einer an sich bekannten Kurzschluß-Bremsschaltung (31 bis 33, 38 bis 52), durch die nach dem Abschalten der Speisespannungsquelle die Ständerwicklung (38, 39) des Motors (4) umgepolt und über dessen Läuferwicklung (40) kurzgeschlossen wird.

3. Handwerkzeugmaschine nach einem der Ansprüche 1 und 2, dadurch gekennzeichnet, daß die Kurzschluß-Bremsschaltung (31 bis 33, 38 bis 52) mit einer Einphasen-Brückenschaltung (34 bis 37) verbunden ist.

4. Handwerkzeugmaschine nach einem der Ansprüche 1 bis 3, dadurch gekennzeichnet, daß dem Element, das bei laufendem Maschinenantrieb die größte kinetische Energie im Kraftfluß vom Motor (4) zum Werkzeug (7) hat, eine elektromagnetisch gesteuerte Bremse (10, 15, 16) zugeordnet ist, deren Bremselement (15) eine Feder (23, 24) in Bremsstellung zu halten sucht und bei der ein dieser Feder (23, 24) entgegenwirkender Elektromagnet (16) vorgesehen ist, der, beim Einschalten des Motors (4) an Spannung gelegt und damit erregt, das Bremselement (15) gegen die Wirkung dieser Feder (23, 24) in Freigabestellung bringt und hält, solange der Motor (4) eingeschaltet ist.

5. Handwerkzeugmaschine nach einem der Ansprüche 1 bis 4, dadurch gekennzeichnet, daß als Bremse eine Bandbremse verwendet ist, deren Bremsband (15) an seinem entgegen der Drehrichtung (53) der Bremstrommel (10), Scheibe oder dergleichen erreichbaren Ende fest mit dem Gerätegehäuse (19, 1) verbunden, an seinem anderen, in Grenzen beweglichen Ende an einem elektromagnetisch bewegbaren Schaltelement (22) befestigt ist.

0042918

R. 6381

6. Handwerkzeugmaschine nach einem der Ansprüche 1 bis 5, dadurch gekennzeichnet, daß die Bremse für einen elektromotorisch betriebenen Handhobel eingesetzt ist und direkt auf eine mit der drehenden Welle (8) der Messerwalze (7) fest verbundenen Bremstrommel (10) wirkt.

7. Handwerkzeugmaschine nach einem der Ansprüche 1 und 4 bis 6, dadurch gekennzeichnet, daß das elektromagnetisch bewegbare Schaltelement eine Klappe (22) ist, an deren freiem Ende das Ende des Bremsbandes (15) befestigt ist und an der vorzugsweise zwei Spiralfedern (23, 24) in Anzugsrichtung des Bremsbandes (15) wirkend angreifen.

8. Handwerkzeugmaschine nach einem der Ansprüche 1 bis 7, dadurch gekennzeichnet, daß sie sowohl eine Bremseinrichtung nach Anspruch 2 als auch eine Bremsvorrichtung nach Anspruch 4 aufweist.

9. Handwerkzeugmaschine nach einem der Ansprüche 1 bis 8, dadurch gekennzeichnet, daß sowohl die Bremseinrichtung (31 bis 33, 38 bis 52) mit der Kurzschluß-Bremsschaltung als auch die Bremsvorrichtung (10, 15, 16) mit dem elektromagnetischen Bremslüfter an einen Schalter (29) mit einer gemeinsamen Schalthandhabe (3) angeschlossen sind.

FIG. 1

# FIG. 2

# FIG. 3

Europäisches
Patentamt

**EUROPÄISCHER RECHERCHENBERICHT**

EP 81 10 2637.6

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| X | <u>AT - B - 340 122</u> (MAFELL-MASCHINENFABRIK)<br>* Anspruch 1 *<br>-- | 1,4 | B 27 G 21/00 |
| | <u>DE - A1 - 2 459 528</u> (TEXTRON INC.)<br>* Anspruch 1; Fig. 1 *<br>-- | 1,5 | |
| | <u>US - A - 2 785 710</u> (J.R. MOWERY)<br>* Anspruch 1 *<br>-- | 1,4 | RECHERCHIERTE SACHGEBIETE (Int. Cl.³) |
| | <u>DE - C - 311 746</u> (AEG)<br>* Seite 1, Zeilen 30 bis 60 *<br>-- | 2 | B 27 G 21/00<br>B 27 G 19/00<br>B 27 C 1/00<br>H 02 P 3/12 |
| | <u>DE - A - 2 254 142</u> (R. KRUPS)<br>* Ansprüche 1 bis 4; Fig. 2 *<br>---- | 2,3 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 28-09-1981 | HOFFMANN |

EPA form 1503.1 06.78